# EUROPÄISCHE PATENTSCHRIFT

(11) **EP 3 073 228 B1**
(45) Veröffentlichungstag und Bekanntmachung des Hinweises auf die Patenterteilung: **29.04.2020**
(21) Anmeldenummer: 16161104.1
(22) Anmeldetag: 18.03.2016
(51) Int. Cl.: G01F 1/50, G01F 5/00, G01F 15/18, G01F 15/02, G01N 11/08, G01F 3/10, G01N 9/32, G01N 11/14

(54) **SYSTEM ZUR MESSUNG VON ZEITLICH AUFGELÖSTEN DURCHFLUSSVORGÄNGEN VON FLUIDEN**
SYSTEM FOR MEASURING TIME-RESOLVED FLOW PROCESSES OF FLUIDS
SYSTEME DE MESURE A RESOLUTION TEMPORELLE DE PROCESSUS DE DEBIT DE FLUIDES

(30) Priorität: 24.03.2015 AT 1682015
(43) Veröffentlichungstag der Anmeldung: 28.09.2016
(73) Patentinhaber: AVL List GmbH, 8020 Graz (AT)
(72) Erfinder: Kammerstetter, Heribert Dr., 5020 Salzburg (AT); Berger, Christian Thomas, 8054 Graz (AT); Derschmidt, Otfried, 8020 Graz (AT); Pross, Manfred, 8020 Graz (AT); Dürrwächter, Martin Dr., 52066 Aachen (DE); Breitwieser, Herwig, 8010 Graz (AT); Bernhard, Othmar, 8471 Spielfeld (AT)
(74) Vertreter: terpatent Patentanwälte ter Smitten Eberlein-Van Hoof Rütten Daubert

(56) Entgegenhaltungen:
- EP-A1- 2 128 574
- WO-A1-02/052243
- WO-A1-2005/005935
- WO-A1-2014/118045
- FR-A- 1 309 888
- GB-A- 2 000 228
- GB-A- 2 259 368

## Beschreibung

Die Erfindung betrifft ein System, welches zur Messung von zeitlich aufgelösten Durchflussvorgängen von Fluiden ausgeführt ist mit einem Einlass, einem Auslass und einem zwischen dem Einlass und dem Auslass angeordneten Durchflussmessgerät mit einer Hauptleitung, über die der Auslass mit dem Einlass fluidisch verbunden ist, einem antreibbaren Verdränger, der in der Hauptleitung angeordnet ist, einer Umgehungsleitung, die zwischen dem Einlass und dem Verdränger von der Hauptleitung abzweigt und zwischen dem Verdränger und dem Auslass in die Hauptleitung mündet, einem Druckdifferenzaufnehmer, der in der Umgehungsleitung angeordnet ist und einer Auswerte- und Steuereinheit, über die der antreibbare Verdränger in Abhängigkeit der am Druckdifferenzaufnehmer anliegenden Druckdifferenz regelbar ist.

Derartige Systeme sind seit vielen Jahren bekannt und werden beispielsweise zur Einspritzmengenmessung bei Verbrennungsmotoren verwendet.

So wird in der DE-AS 1 798 080 ein elektronisch gesteuertes Durchflussmessgerät mit einem Einlass und einem Auslass beschrieben, zwischen denen ein rotatorischer Verdränger in Form einer Zahnradpumpe sowie in einer zum Verdränger parallelen Leitung ein Kolben in einer Messkammer angeordnet ist. Zur Bestimmung der Durchflussmenge wird die Auslenkung des Kolbens in der Messkammer mittels eines optischen Sensors gemessen. Die Drehzahl der Zahnradpumpe wird aufgrund dieses Signals über eine Auswerte- und Steuereinheit stetig nachgeregelt und zwar derart, dass der Kolben möglichst immer in seine Ausgangsposition zurückgeführt wird, so dass in der Umgehungsleitung lediglich kleine Strömungen entstehen. Aus der über einen Kodierer gemessenen Anzahl der Umdrehungen oder Teilumdrehungen der Zahnradpumpe sowie dem bekannten Fördervolumen der Zahnradpumpe bei einer Umdrehung wird so der Durchfluss innerhalb eines vorgegebenen Zeitintervalls berechnet.

Ein derartig aufgebautes Durchflussmengenmessgerät wird auch in der DE 103 31 228 B3 beschrieben. Zur Bestimmung der genauen Einspritzmengenverläufe wird die Zahnradpumpe vor Beginn der Einspritzung jeweils auf eine konstante Drehzahl eingestellt, so dass anschließend die Bewegung des Kolbens gemessen wird und zur Bestimmung der Einspritzverläufe genutzt wird. In der Messkammer sind zusätzlich ein Drucksensor sowie ein Temperatursensor angeordnet, deren Messwerte zur Berechnung und Korrektur der Einspritzmengenverläufe ebenfalls der Recheneinheit zugeführt werden.

Des Weiteren ist aus der FR 1.309.888 ein Flügelraddurchflussmesser bekannt, stromaufwärts dessen eine Pumpe mit einem weiteren Durchflussmesser zur Viskositätsbestimmung angeordnet ist.

Es hat sich jedoch herausgestellt, dass die Bestimmung der Einspritzmengenverläufe weiterhin geringen Fehlern unterliegt, die durch bislang nicht beachtete Schwankungen der Viskosität oder der Dichte des gemessenen Fluides begründet sind.

Es stellt sich somit die Aufgabe, ein System zur Messung von zeitlich aufgelösten Durchflussvorgängen von Fluiden zur Verfügung zu stellen, mit der die Durchflussverläufe noch genauer berechnet werden können. Insbesondere sollen hierzu zusätzliche Informationen bezüglich der jeweiligen physikalischen Eigenschaften des Fluides berücksichtigt werden, ohne die eigentlich mit dem Durchflussmessgerät gemessenen Ergebnisse negativ zu beeinflussen, was zu befürchten wäre, wenn beispielsweise ein Dichtesensor in die Hauptleitung oder die Umgehungsleitung des Messgerätes verbaut würde.

Diese Aufgabe wird durch ein System zur Messung von zeitlich aufgelösten Durchflussvorgängen eines Fluides mit den Merkmalen des Anspruchs 1 gelöst.

Dadurch, dass ein Leitungsabschnitt des Durchflussmessgeräts über eine Bypassleitung, die von der Hauptleitung oder der Umgehungsleitung abzweigt und an der gleichen Seite des Verdrängers und des Druckdifferenzaufnehmers unter Umgehung des Leitungsabschnitts der Hauptleitung oder der Umgehungsleitung in die Hauptleitung oder die Umgehungsleitung mündet, umgehbar ist, wobei in der Bypassleitung eine pulsationsfrei fördernde Pumpe und ein Sensor zur Messung der Dichte oder der Viskosität des geförderten Fluides in Reihe geschaltet angeordnet sind, kann für ein Durchflussmessgerät eine zusätzliche physikalische Größe, wie die Dichte oder Viskosität des gemessenen Fluides bei der Bestimmung des Durchflusses mit berücksichtigt werden. Hierzu wird mittels der Pumpe eine Strömung durch den Sensor sichergestellt. Durch die Anordnung in der Bypassleitung werden Rückwirkungen auf das Durchflussmessgerät verhindert. Durch eine vollständige Pulsationsfreiheit der Pumpe wird eine Beeinflussung des Druckdifferenzaufnehmers und damit der Messergebnisse des Durchflussmessgerätes vollständig ausgeschlossen. Zusätzlich werden Fehlmessungen der Dichtesensoren vermieden, welche insbesondere, wenn sie als MEMS-Sensoren ausgeführt werden, selbst durch die Schwingungen des Messfluides zum Schwingen angeregt würden, was deren Messergebnisse verfälschen würde. Es wird unabhängig von einem Durchfluss in der Hauptleitung oder der Umgehungsleitung ein Durchfluss in der Bypassleitung zur Verfügung gestellt, der eine korrekte Funktion des in der Bypassleitung angeordneten Sensors sicherstellt. Vor allem wird ein ausreichender Durchfluss durch den Sensor sichergestellt, der bei Einbau des Sensors in der Hauptleitung oder der Umgehungsleitung durch externe Energiezufuhr bereitgestellt werden müsste, was zu einer Rückwirkung auf die Messdaten des Durchflussmessgerätes führen würde. Insbesondere Dichtesensoren benötigen einen solchen Durchfluss, um korrekte Messwerte zu liefern. Die Werte des entsprechenden Sensors können entweder lediglich zur Auswertung oder auch als zusätzliche Regelgröße dienen. Durch die Verwendung dieses erfindungsgemäßen Systems können noch genauere Messergebnisse eines derartigen Durchflussmessgerätes erzielt werden.

Vorzugsweise zweigt die Bypassleitung von der Umgehungsleitung zwischen dem Einlass und dem Druckdifferenzaufnehmer ab und mündet dort auch. Diese Position ist einerseits sehr gut zugänglich, so dass kurze Verbindungsleitungen ausreichen und andererseits wird eine Beeinflussung der Messung verhindert, da das Medium direkt im Kreis geführt werden kann, ohne dass eine Strömung an der Messkammer erzeugt wird.

Insbesondere ist es vorteilhaft, wenn der Sensor ein Dichtesensor oder Viskositätssensor ist, der als MEMS-Sensoren ausgebildet ist, die nach dem Coriolisprinzip arbeiten, so dass deren Messwerte zusätzliche Informationen liefern, welche in die Ergebnisse des Durchflussmessgerätes zur Verbesserung des berechneten Durchflusses mit berücksichtigt werden können.

Besonders vorteilhaft ist es, wenn die pulsationsfrei fördernde Pumpe eine Teslapumpe ist. Teslapumpen fördern ein Fluid ohne Schaufeln verwenden zu müssen, sondern lediglich aufgrund der vorhandenen Viskosität des Fluides unter Nutzung der Adhäsionskräfte. Hierzu werden mehrere nebeneinander angeordnete Scheiben, zwischen die zentral das Fluid eingeführt wird, über einen Elektromotor in Drehung versetzt, wodurch das Fluid tangential in Drehrichtung und radial nach außen aufgrund der Viskosität und der Adhäsion mit nach außen wachsender Geschwindigkeit gefördert wird. Dies führt zu einer pulsationsfreien Förderung mit guten Wirkungsgraden. Eine solche Pumpe kann sehr klein bauend ausgeführt werden und dennoch dem relativ hohen Systemdruck des Verdrängerzählers von etwa 20 bar und Temperaturen von bis zu 150°C standhalten. Zusätzlich arbeitet eine solche Pumpe ohne Ventile, so dass das System bei Stillstand des Durchflussmessgerätes offen bleibt. Da auch die Fertigungstoleranzen gering sind, ist eine solche Pumpe kostengünstig herstellbar.

In einer weiterführenden Ausführungsform ist die Teslapumpe in Förderrichtung des Fluides in der Bypassleitung vor dem Sensor angeordnet, wodurch Lufteinschlüsse bei Inbetriebnahme im Bereich des Sensors nicht zur Pumpe gelangen. Solche Luftblasen können von einer Teslapumpe aufgrund zu geringer Adhäsionskräfte des Mediums nicht gefördert werden, wodurch sonst der Wirkungsgrad der Pumpe extrem herabgesetzt würde.

Entsprechend ist es vorteilhaft, wenn ein Einlass zu einem Strömungsraum der Teslapumpe, in dem ein Rotor der Teslapumpe angeordnet ist, geodätisch unterhalb der Abzweigung der Bypassleitung angeordnet ist, da Luft aus dem Bereich des Einlasses in Richtung der Umgehungsleitung aufsteigen und von dort abgeführt werden kann, wodurch die Funktion der Teslapumpe sichergestellt wird.

In einer hierzu weiterführenden vorteilhaften Ausbildung der Erfindung ist der Bypassleitungsabschnitt zwischen der Abzweigung der Bypassleitung und dem Einlass zum Strömungsraum der Pumpe stetig in Richtung des Einlasses der Pumpe abfallend ausgebildet. Luftblasen in diesem Bypassleitungsabschnitt, der zur Pumpe führt, steigen entsprechend entlang des Bypassleitungsabschnitts in Richtung der Umgehungsleitung und können dort zuverlässig abgeführt werden, wodurch die Funktion der Pumpe sichergestellt wird.

Als besonders vorteilhaft hat es sich herausgestellt, wenn die Neigung des Bypassleitungsabschnitts zwischen der Abzweigung und dem Einlass der Teslapumpe zwischen 9° und 12° beträgt. Hierdurch wird ein Aufsteigen von Luftblasen sichergestellt und es kann gleichzeitig eine kompakte Bauweise aufrechterhalten werden.

Vorzugsweise ist ein Auslass der Teslapumpe geodätisch oberhalb des Strömungsraumes der Teslapumpe angeordnet. Im Strömungsraum bei der Erstinbetriebnahme angeordnete Luftblasen steigen entsprechend zum Auslass auf und verlassen den Strömungsraum, so dass eine Förderung der Pumpe beim Einschalten sichergestellt wird.

Zusätzlich ist vorteilhaft, wenn ein Auslasskanal der Teslapumpe in Strömungsrichtung steigend ausgebildet, wodurch ein Rückströmen der Luftblasen vom Auslass zum Rotor verhindert wird.

Um eine möglichst kompakte und gut abgedichtete Einheit zur Verfügung zu stellen, weist das System einen Vollkörper auf, der mit dem Körper, in dem die Umgehungsleitung ausgebildet ist, verbunden ist und in dem ein Strömungsraum der Pumpe, der Einlass der Pumpe, der Auslass der Pumpe sowie ein Bypassleitungsabschnitt zwischen dem Auslass der Pumpe und einem Einlass des Sensors sowie ein Bypassleitungsabschnitt zwischen dem Auslass des Sensors und der Mündung in die Umgehungsleitung zumindest teilweise ausgebildet sind. Die hydraulischen Leitungsabschnitte sind alle einfach als dünne Bohrungen im Vollkörper herzustellen. Zusätzliche flexible Leitungen können entfallen.

Vorzugsweise ist der Durchströmungsquerschnitt der Bypassleitung kleiner als der Durchströmungsquerschnitt der Hauptleitung und der Umgehungsleitung, insbesondere etwa 4 mm. Dies minimiert die Auswirkungen auf die Strömungen in der Umgehungsleitung, wobei gleichzeitig jedoch eine ausreichende Druckdifferenz zur Dichtemessung zur Verfügung gestellt wird. Da bei optimaler Regelung des Verdrängers in der Umgehungsleitung theoretisch keine Strömung vorliegt, muss eine Strömung durch zu hohe erzeugte Druckdifferenzen bezogen auf den Strömungsquerschnitt der Umgehungsleitung vermieden werden. Dies wird durch die vorliegende Bypassleitung erreicht, ohne dass zu hohe Druckverluste in der Bypassleitung zu erzeugen.

Es wird somit ein System zur Messung von zeitlich aufgelösten Durchflussvorgängen von Fluiden zur Verfügung gestellt, mit dem zeitlich aufgelöste Durchflussvorgänge mit hoher Genauigkeit und kontinuierlich ermittelt werden können. Dabei werden zusätzliche Daten zur Regelung des Systems oder zur Auswertung der Messergebnisse insbesondere bezüglich der physikalischen Größen Dichte oder Viskosität des Fluides zur Verfügung gestellt, ohne die eigentliche Messung negativ beispielsweise durch auftretende Pulsationen zu beeinflussen. Der zusätzliche benötigte Bauraum ist sehr gering. Dabei wird eine hohe Druck- und Temperaturbeständigkeit der verwendeten erreicht.

Das erfindungsgemäße System zur Messung von zeitlich aufgelösten Durchflussvorgängen von Fluiden wird im Folgenden anhand eines in den Figuren dargestellten, nicht einschränkenden Ausführungsbeispiels im Folgenden beschrieben.
Figur 1 zeigt ein Schema des prinzipiellen Aufbaus eines erfindungsgemäßen Systems zur Messung von zeitlich aufgelösten Durchflussvorgängen von Fluiden.
Figur 2 zeigt eine perspektivische Ansicht eines Ausschnitts eines Versuchsaufbaus des erfindungsgemäßen Systems mit teilweise aufgeschnitten dargestellten Körpern.

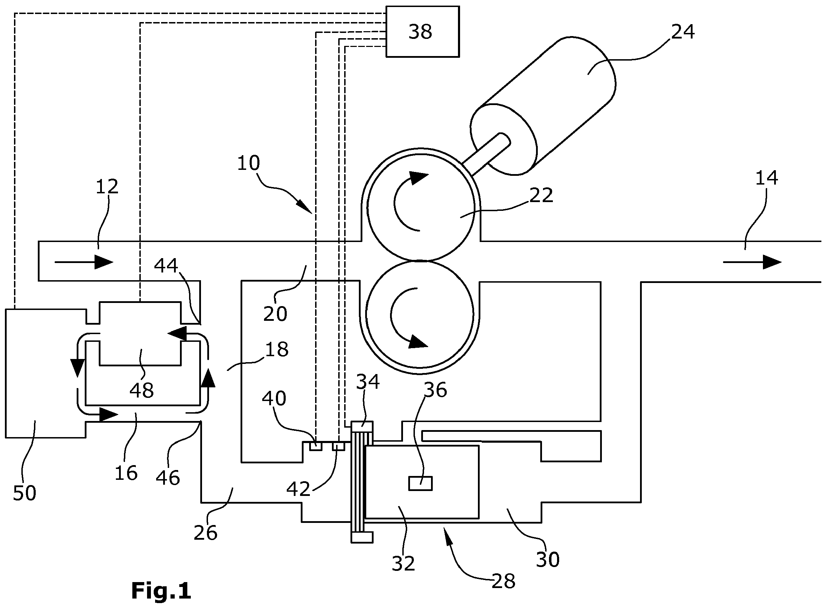

Das in Figur 1 dargestellte erfindungsgemäße System zur Messung von zeitlich aufgelösten Durchflussvorgängen von Fluiden besteht aus einem Durchflussmessgerät 10 mit einem Einlass 12 und einem Auslass 14 sowie einer Bypassleitung 16, über die ein Leitungsabschnitt 18 des Durchflussmessgerätes 10 umgehbar ist.

Über den Einlass 12 strömt ein zu messendes Fluid, insbesondere ein Kraftstoff, aus einer einen Durchfluss erzeugenden Vorrichtung, insbesondere einer Kraftstoffhochdruckpumpe, und zumindest einem Einspritzventil, in eine Hauptleitung 20 des Durchflussmessgerätes 10. In dieser Hauptleitung 20 ist ein rotatorischer Verdränger 22 in Form einer Doppelzahnradpumpe angeordnet. Stromabwärts des Verdrängers 22 endet die Hauptleitung 20 am Auslass 14. Die Zahnradpumpe 22 wird über eine Kupplung oder ein Getriebe von einem Antriebsmotor 24 angetrieben.

Von der Hauptleitung 20 zweigt zwischen dem Einlass 12 und dem rotatorischen Verdränger 22 eine Umgehungsleitung 26 ab, die stromabwärts des rotatorischen Verdrängers 22 zwischen diesem und dem Auslass 14 wieder in die Hauptleitung 20 mündet und entsprechend wie die Hauptleitung 20 fluidisch mit dem Einlass 12 und dem Auslass 14 verbunden ist. In dieser Umgehungsleitung 26 ist ein translatorischer Druckdifferenzaufnehmer 28 angeordnet, der aus einer Messkammer 30 und einem in der Messkammer 30 frei verschiebbar angeordneten Kolben 32 besteht, der das gleiche spezifische Gewicht wie das Messfluid, also der Kraftstoff aufweist und wie die Messkammer 30 zylindrisch geformt ist; die Messkammer 30 weist somit einen Innendurchmesser auf, der im Wesentlichen dem Außendurchmesser des Kolbens 32 entspricht. Bei Anliegen einer Druckdifferenz zwischen der Vorderseite und der Rückseite des Kolbens 32 erfolgt eine Auslenkung des Kolbens 32 aus seiner Ruhestellung. Entsprechend ist die Auslenkung des Kolbens 32 ein Maß für die anliegende Druckdifferenz, An der Messkammer 30 ist ein Wegsensor 34 angeordnet, der in Wirkverbindung mit dem Kolben 32 steht und in dem durch die Auslenkung des Kolbens 32 eine von der Größe der Auslenkung des Kolbens 32 abhängige Spannung erzeugt wird. Dieser an der Messkammer 30 befestigte Wegsensor 34 ist insbesondere ein magnetoresistiver Sensor, über den die auf ihn wirkende Feldstärke eines Magneten 36 in eine Spannung umgewandelt wird. Hierzu ist der Magnet 36 im Schwerpunkt des Kolbens 32 befestigt. Als Wegsensoren können auch Lichtsensoren eingesetzt werden.

Der Wegsensor 34 ist mit einer Auswerte- und Steuereinheit 38 verbunden, welche die Werte dieses Wegsensors 34 aufnimmt und entsprechende Steuersignale dem Antriebsmotor 24 übermittelt, der möglichst derart angesteuert wird, dass sich der Kolben 32 immer in einer definierten Ausgangsstellung befindet, die Zahnradpumpe 22 also die aufgrund des eingespritzten Fluides am Kolben 32 entstehende Druckdifferenz durch Förderung ständig etwa ausgleicht. Dies bedeutet, dass bei Auslenkung des Kolbens 32 nach rechts in Abhängigkeit der Größe dieser Auslenkung die Pumpendrehzahl erhöht wird und umgekehrt. Hierzu wird die Auslenkung des Kolbens 32 beziehungsweise das durch ihn verdrängte Volumen in der Messkammer 30 mittels einer Übertragungsfunktion in ein gewünschtes Fördervolumen der Zahnradpumpe 22 beziehungsweise eine Drehzahl des Antriebsmotors 24 umgerechnet und der Antriebsmotor 24 entsprechend bestromt.

In der Messkammer 30 sind ein Drucksensor 40 sowie ein Temperatursensor 42 angeordnet, die kontinuierlich die in diesem Bereich auftretenden Drücke und Temperaturen messen und wiederum der Auswerte- und Steuereinheit 38 zuführen, um Änderungen der Dichte bei der Berechnung berücksichtigen zu können.

Der Ablauf der Messungen erfolgt derart, dass bei der Berechnung eines zu ermittelnden Gesamtdurchflusses in der Auswerte- und Steuereinheit 38 sowohl ein durch die Bewegung beziehungsweise Stellung des Kolbens 32 und das damit verdrängte Volumen in der Messkammer 30 entstehender Durchfluss in der Umgehungsleitung 26 als auch ein tatsächlicher Durchfluss der Zahnradpumpe 22 in einem festgelegten Zeitintervall berücksichtigt werden und beide Durchflüsse zur Ermittlung des Gesamtdurchflusses miteinander addiert werden.

Die Ermittlung des Durchflusses am Kolben 32 erfolgt beispielsweise, indem in der Auswerte- und Steuereinheit 38, die mit dem Wegsensor 34 verbunden ist, die Auslenkung des Kolbens 32 differenziert wird und anschließend mit der Grundfläche des Kolbens 32 multipliziert wird, so dass sich ein Volumenstrom in der Umgehungsleitung 26 in diesem Zeitintervall ergibt.

Der Durchfluss durch die Zahnradpumpe 22 und somit in der Hauptleitung 20 kann entweder aus den ermittelten Steuerdaten zur Regelung der Zahnradpumpe 22 bestimmt werden oder über die Drehzahl berechnet werden, wenn diese direkt an der Zahnradpumpe 22 oder am Antriebsmotor 24 beispielsweise über optische Kodierer oder magnetoresistive Sensoren gemessen wird.

Erfindungsgemäß zweigt im vorliegenden Ausführungsbeispiel zwischen dem Einlass 12 und der Messkammer 30 von der Umgehungsleitung 26 die Bypassleitung 16 ab, die vor der Messkammer 30 unter Umgehung des Leitungsabschnitts 18 wieder in die Umgehungsleitung 26 mündet. Es wäre auch möglich, diese Bypassleitung 16 an einer beliebigen anderen Position der Hauptleitung 20 oder der Umgehungsleitung 26 abzweigen und wieder münden zu lassen, wobei die Bypassleitung 16 nicht den Verdränger 22 oder den Druckdifferenzaufnehmer 28 umgehen darf.

Zwischen der Abzweigung 44 und der Mündung 46 sind in der Bypassleitung 16 eine pulsationsfrei fördernde Pumpe 48 in Form einer Teslapumpe sowie ein Sensor 50 zur Messung einer chemischen oder physikalischen Eigenschaft des geförderten Fluides in Reihe geschaltet hintereinander angeordnet. Dieser Sensor 50 ist ein Dichtesensor oder ein Viskositätssensor, der beispielsweise als nach dem Coriolis-Prinzip messender MEMS-Sensor ausgebildet ist. Die Teslapumpe 48 und der Sensor 50 sind beide elektrisch mit der Auswerte- und Steuereinheit 38 verbunden, so dass die Messwerte des Sensors 50 genutzt werden können, um die berechneten Durchflusswerte durch die zusätzlichen Informationen zur Dichte oder Viskosität verbessern zu können und die Teslapumpe 48 anzusteuern. Diese Pumpe 48 ist notwendig, um eine Strömung über den Sensor 50 sicherzustellen, dessen Messwerte andernfalls von den tatsächlichen zu messenden Werten aufgrund eines Strömungsstillstande abweichen könnten. Die pulsationsfreie Förderung der Teslapumpe 48 verhindert ebenfalls, dass die Messwerte des Sensors 50 verfälscht werden, denn diese Sensoren 50 neigen bei pulsierenden Strömungen ebenfalls zu Pulsationen. Entsprechend werden der Auswerte- und Steuereinheit 38 korrekte zusätzliche Informationen zugeführt, die sowohl bei der Ansteuerung des Verdrängers 22 als auch bei der Berechnung der Durchflüsse verwendet werden können, um so die Ergebnisse zusätzlich verbessern.

Die Teslapumpe 48 besteht im Wesentlichen aus einem Elektromotor 52, der beispielsweise als elektronisch kommutierter Gleichstrommotor ausgeführt werden kann sowie einem Rotor 54, der aus mehreren Scheiben 56 besteht, die hintereinander jedoch mit geringen Abständen zueinander in einem Strömungsraum 58 der Teslapumpe 48 angeordnet sind und über den Elektromotor 52 angetrieben werden. Bei Bestromung des Elektromotors 52 wird der Rotor 54 in Drehung versetzt.

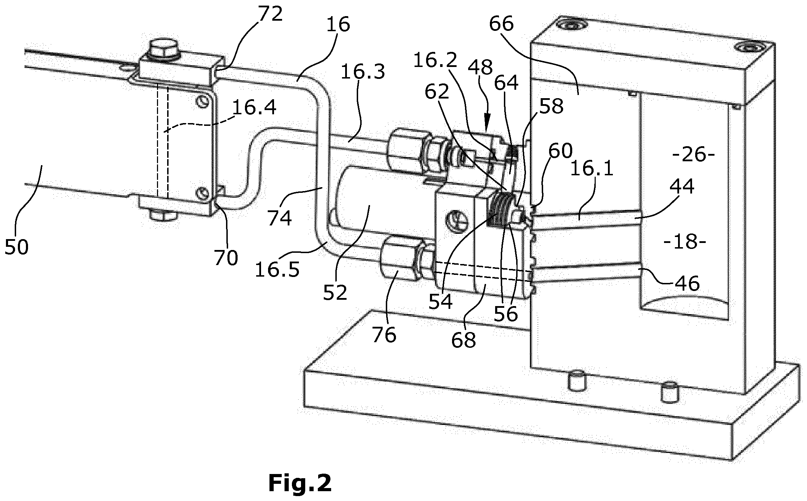

In der Figur 2 ist anhand eines Versuchsaufbaus, in der ein Teil der Umgehungsleitung 26 und insbesondere der Leitungsabschnitt 18 durch eine separate zylindrische Leitung simuliert wird, dargestellt, wie auch am realen Durchflussmessgerät 10 die Bypassleitung 16 sowie die Pumpe 48 und der Sensor 50 in der Bypassleitung 16 mit der hier simulierten Umgehungsleitung 26 verbunden sind. Die Teslapumpe 48 weist einen zentralen Einlass 60 auf, über den das Fluid in den Strömungsraum 58 zwischen den Scheiben 56 einströmen kann. Hierzu weisen die Scheiben 56 im inneren Bereich Öffnungen auf. Durch die Drehung der Scheiben 56 wird das Fluid aufgrund seiner Viskosität durch die auftretenden Adhäsionskräfte in tangentialer Richtung sowie nach radial außen zwischen den Scheiben 56 beschleunigt. Entsprechend entsteht eine Strömung des Fluides, welches den Strömungsraum 58 der Pumpe 48 über einen Auslass 62 wieder verlässt, der geodätisch oberhalb des Strömungsraumes 58 angeordnet ist. Ein sich vom Auslass 62 erstreckender Auslasskanal 64 verläuft tangential zum Strömungsraum, um Druckverluste zu vermeiden. Dadurch, dass diese Pumpe 48 keine Schaufeln aufweist, entsteht eine pulsationsfreie Strömung in Richtung des Sensors 50. Des Weiteren steigt das Durchflusskennfeld der Teslapumpe 48 im Wesentlichen linear zur Drehzahl des Rotors 54, so dass die Pumpe 48 einfach zu regeln ist.

Der Durchströmungsquerschnitt der Umgehungsleitung 26 des Durchflussmessgerätes 10 ist deutlich größer als der Querschnitt der Bypassleitung 16, deren Durchmesser beispielsweise etwa 4 mm beträgt, so dass zur Erzeugung einer notwendigen Druckdifferenz relativ geringe Strömungsmengen erforderlich sind. Die Pulsationsfreiheit der Pumpe 48 als auch diese geringeren Strömungsmengen stellen sicher, dass eine Rückwirkung auf den Regelkreis des Verdrängers 22 und des Druckdifferenzaufnehmers 28 aufgrund unerwünschter Strömungen oder Pulsationen praktisch nicht vorhanden ist. Des Weiteren hat sich dieser Durchmesser als vorteilhaft erwiesen, um Lufteinschlüsse, die insbesondere bei der Erstinbetriebnahme entstehen, abführen zu können.

Um Messfehler durch Lufteinschlüsse im System zu verhindern, werden weitere Maßnahmen getroffen. Ein Bypassleitungsabschnitt 16.1, der von der Abzweigung 44 zum Einlass 60 in den Strömungsraum 58 und damit zum Rotor 54 der Pumpe 48 führt, Ist in Richtung des Einlasses 60 um einen Winkel von etwa 11° geneigt ausgebildet. Dies hat zur Folge, dass Lufteinschlüsse in diesem Bypassleitungsabschnitt 16.1 zur Umgehungsleitung 26 aufsteigen und dort abgeführt werden können. Auch die Ausführung des Auslasskanals 64 der Pumpe 48, welche im geodätisch oberen Bereich angeordnet ist und sich weiter nach oben erstreckt, führt zu einem Aufsteigen der Luftblasen aus dem Strömungsraum 58 der Pumpe 48. Entsprechend wird der Strömungsraum 58 bei Stillstand der Pumpe 48 mit Fluid gefüllt, wodurch eine Förderung der Pumpe 48 sichergestellt wird, in der sich andernfalls nicht abführbare Luft im Innern des Rotors 54 sammeln würde.

Die Strömungs- und Leitungsführung erfolgt derart, dass zunächst von der Umgehungsleitung 26 an der Abzweigung 44 der erste zum Einlass 60 der Teslapumpe 48 führende Bypassleitungsabschnitt 16.1 unter einem Winkel von 11° nach unten führend abzweigt. Dieser Bypassleitungsabschnitt 16.1 ist in einem Körper 66 ausgebildet, in dem auch ein Abschnitt der Umgehungsleitung 26 ausgebildet ist. An diesem Körper 66 ist ein Vollkörper 68 befestigt, in dem der Einlass 60 zur Teslapumpe 48 sowie deren Strömungsraum 58 ausgebildet sind. Zusätzlich zweigt vom Strömungsraum 58 in diesem Vollkörper 68 der Auslasskanal 64 der Pumpe 48 ab. Dieser mündet in einem weiteren etwa waagerecht verlaufenden Bypassleitungsabschnitt 16.2, der in einen zum Sensor 50 führenden Bypassleitungsabschnitt 16.3 in Form eines Anschlussrohres übergeht, welches derart nach unten gekrümmt ist, dass ein Einlass 70 geodätisch unterhalb des Sensors 50 angeordnet ist. Ein folgender Bypassleitungsabschnitt 16.4 führt etwa senkrecht durch den Sensor zu dessen oben angeordneten Auslass 72. Vom Auslass 72 erstreckt sich ein Bypassleitungsabschnitt 16.5, der zunächst durch ein gekrümmtes Rohr 74 gebildet wird, dessen Anschlussstutzen 76 geodätisch unterhalb des Strömungsraumes 58 am Vollkörper 68 befestigt ist, und sich im Innern des Vollkörpers 68 sowie des Körpers 66 bis zur Mündung 46 fortsetzt, welche entsprechend geodätisch unterhalb der Abzweigung angeordnet ist.

Es ist zu erkennen, dass der Leitungsabschnitt 18 der Umgehungsleitung 26 durch die Bypassleitung 16 umgangen wird, wobei bei Förderung durch die Teslapumpe 48 eine Kreislaufströmung über den Leitungsabschnitt 18 von der Mündung 46 der Bypassleitung 16 zur Abzweigung 44 entsteht, insbesondere, da im Idealfall die Zahnradpumpe 22 eine Druckdifferenz über den Kolben 32 vollständig ausgleicht, wodurch in der Umgehungsleitung 26 im Idealfall keine Strömung auftritt.

Eine Strömung, die durch eine Drehung des Rotors 54 der Teslapumpe 48 in der Bypassleitung 16 erzeugt wird, erfolgt entsprechend entlang dieser Bypassleitungsabschnitte 16.1-16.5, den Leitungsabschnitt 18 und durch den Sensor 50, dessen Messwerte dann zur Auswerte- und Steuereinheit übermittelt werden. Somit berechnet das Durchflussmessgerät zeitlich hoch aufgelöste Durchflussvorgänge mit hoher Genauigkeit und kontinuierlich, wobei im Vergleich zu bekannten Ausführungen zusätzliche Daten zur Regelung des Systems oder zur Auswertung der Messergebnisse insbesondere bezüglich der physikalischen Größen Dichte oder Viskosität des Fluides zur Verfügung gestellt werden. Dabei wird sowohl eine ausreichende Strömung zur Sicherstellung der Funktion des Dichtesensors zur Verfügung gestellt als auch Rückwirkungen auf das Durchflussmessgerätes vermieden, da zu große Strömungsmengen und auftretende Pulsationen ausgeschlossen werden. Das System ist sehr kompakt aufgebaut und weist eine hohe Druck- und Temperaturbeständigkeit von bis zu 20 bar und 150°C auf. Zusätzlich wurden Vorkehrungen zur Sicherstellung der Funktion der Pumpe durch Abfuhr von störenden Luftblasen getroffen. Der Dichtesensor und die Pumpe können sowohl kontinuierlich als auch in definierten zeitlichen Abständen betrieben werden und ihre Daten an die Auswerte- und Steuereinheit weitergeben

Es sollte deutlich sein, dass die Erfindung nicht auf das beschriebene Ausführungsbeispiel begrenzt ist, sondern verschiedene Modifikationen innerhalb des Schutzbereichs des Hauptanspruchs möglich sind. Prinzipiell könne auch andere kontinuierlich arbeitende Durchflussmessgeräte benutzt werden oder die Bypassleitung kann an einer anderen Position des Durchflussmessgerätes den entsprechenden Leitungsabschnitt umgehen.

## Patentansprüche

1. System ausgeführt zur Messung von zeitlich aufgelösten Durchflussvorgängen von Fluiden mit
einem Einlass (12),
einem Auslass (14)
und einem zwischen dem Einlass (12) und dem Auslass (14) angeordneten Durchflussmessgerät (10) mit
- einer Hauptleitung (20), über die der Auslass (14) mit dem Einlass (12) fluidisch verbunden ist,
- einem antreibbaren Verdränger (22), der in der Hauptleitung (20) angeordnet ist,
- einer Umgehungsleitung (26), die zwischen dem Einlass (12) und dem Verdränger (22) von der Hauptleitung (20) abzweigt und zwischen dem Verdränger (22) und dem Auslass (14) in die Hauptleitung (20) mündet,
- einem Druckdifferenzaufnehmer (28), der in der Umgehungsleitung (26) angeordnet ist,
- und einer Auswerte- und Steuereinheit (38), über die der antreibbare Verdränger (22) in Abhängigkeit der am Druckdifferenzaufnehmer (28) anliegenden Druckdifferenz regelbar ist,
**dadurch gekennzeichnet, dass**
ein Leitungsabschnitt (18) des Durchflussmessgeräts (10) über eine Bypassleitung (16), die von der Hauptleitung (20) oder der Umgehungsleitung (26) abzweigt und an der gleichen Seite des Verdrängers (22) und des Druckdifferenzaufnehmers (28) unter Umgehung des Leitungsabschnitts (18) der Hauptleitung (20) oder der Umgehungsleitung (26) in die Hauptleitung (20) oder die Umgehungsleitung (26) mündet, umgehbar ist, wobei in der Bypassleitung (16) eine pulsationsfrei fördernde Pumpe (48) und ein Sensor (50) zur Messung der Dichte oder der Viskosität des geförderten Fluides in Reihe geschaltet angeordnet sind.

2. System zur Messung von zeitlich aufgelösten Durchflussvorgängen von Fluiden nach Anspruch 1,
**dadurch gekennzeichnet, dass**
die Bypassleitung (16) von der Umgehungsleitung (26) zwischen dem Einlass (12) und dem Druckdifferenzaufnehmer (28) abzweigt und mündet.

3. System zur Messung von zeitlich aufgelösten Durchflussvorgängen von Fluiden nach einem der vorhergehenden Ansprüche,
**dadurch gekennzeichnet, dass**
die pulsationsfrei fördernde Pumpe (48) eine Teslapumpe ist.

4. System zur Messung von zeitlich aufgelösten Durchflussvorgängen von Fluiden nach Anspruch 3,
**dadurch gekennzeichnet, dass**
die Teslapumpe (48) in Förderrichtung vor dem Sensor (50) angeordnet ist.

5. System zur Messung von zeitlich aufgelösten Durchflussvorgängen von Fluiden nach einem der Ansprüche 3 oder 4,
**dadurch gekennzeichnet, dass**
ein Einlass (60) zu einem Strömungsraum (58) der Teslapumpe (48), in dem ein Rotor (54) der Teslapumpe (48) angeordnet ist, geodätisch unterhalb der Abzweigung (44) der Bypassleitung (16) angeordnet ist.

6. System zur Messung von zeitlich aufgelösten Durchflussvorgängen von Fluiden nach Anspruch 5,
**dadurch gekennzeichnet, dass**
der Bypassleitungsabschnitt (16.1) zwischen der Abzweigung (44) und dem Einlass (60) zum Strömungsraum (58) der Teslapumpe (48) stetig in Richtung des Einlasses (60) der Teslapumpe (48) abfallend ausgebildet ist.

7. System zur Messung von zeitlich aufgelösten Durchflussvorgängen von Fluiden nach Anspruch 6,
**dadurch gekennzeichnet, dass**
die Neigung des Bypassleitungsabschnittes (16.1) zwischen der Abzweigung (44) und dem Einlass (60) der Teslapumpe (48) zwischen 9° und 12° beträgt.

8. System zur Messung von zeitlich aufgelösten Durchflussvorgängen von Fluiden nach einem der Ansprüche 5 bis 7,
**dadurch gekennzeichnet, dass**
ein Auslass (62) der Teslapumpe (48) geodätisch oberhalb des Strömungsraumes (58) der Teslapumpe (48) angeordnet ist.

9. System zur Messung von zeitlich aufgelösten Durchflussvorgängen von Fluiden nach Anspruch 8,
**dadurch gekennzeichnet, dass**
ein Auslasskanal (64) der Teslapumpe (48) in Förderrichtung steigend ausgebildet ist.

10. System zur Messung von zeitlich aufgelösten Durchflussvorgängen von Fluiden nach einem der Ansprüche 5 bis 9,
**dadurch gekennzeichnet, dass**
das System einen Vollkörper (68) aufweist, der mit einem Körper (66), in dem die Umgehungsleitung (26) ausgebildet ist, verbunden ist und in dem ein Strömungsraum (58) der Pumpe (48), der Einlass (60) der Pumpe (48), der Auslasskanal (64) der Pumpe (48) sowie ein Bypassleitungsabschnitt (16.2) zwischen dem Auslasskanal (64) der Pumpe (48) und einem Einlass (70) des Sensors (50) sowie ein Bypassleitungsabschnitt (16.5) zwischen dem Auslass (72) des Sensors (50) und der Mündung (46) in die Umgehungsleitung (26) zumindest teilweise ausgebildet sind.

11. System zur Messung von zeitlich aufgelösten Durchflussvorgängen von Fluiden nach einem der vorhergehenden Ansprüche,
**dadurch gekennzeichnet, dass**
der Durchströmungsquerschnitt der Bypassleitung (16) kleiner ist als der Durchströmungsquerschnitt der Hauptleitung (20) und der Umgehungsleitung (26).

## Claims

1. A system for measuring temporally resolved through-flow processes of fluids, comprising
an inlet (12),
an outlet (14),
and a through-flow meter (10) arranged between said inlet (12) and said outlet (14), with
- a main line (20), via which the outlet (14) is fluidically connected with said inlet (12),
- a displacement device (22) adapted to be driven and arranged in said main line (20),
- a circuitous line (26) which branches off said main line (20) between said inlet (12) and said displacement device (22) and enters said main line (20) between said displacement device (22) and said outlet (14),
- a pressure difference transducer (28) which is arranged in said circuitous line (26),
- and an evaluation and control unit (38) via which the displacement device (22) adapted to be driven is controllable as a function of the pressure difference prevailing at said pressure difference transducer (28), **characterized in that**
a line section (18) of said through-flow meter (10) is adapted to be passed by via a bypass line (16) branching off from said main line (20) or said circuitous line (26) and opening at the same side of said displacement device (22) and said pressure difference transducer (28) into the main line (20) or the circuitous line (26), while bypassing the line section (18) of said main (20) line or said circuitous line (26), wherein a pump (48) delivering in a pulsation-free manner and a sensor (50) for measuring the density or the viscosity of the delivered fluid are connected in series in said bypass line (16).

2. The system for measuring temporally resolved through-flow processes of fluids according to claim 1,
wherein the bypass line (16) branches off the circuitous line (26) between the inlet (12) and the pressure difference transducer (38) and ends there.

3. The system for measuring temporally resolved through-flow processes of fluids of one of the preceding claims,
wherein the pump (48) delivering in a pulsation-free manner is a Tesla pump.

4. The system for measuring temporally resolved through-flow processes of fluids according to claim 3,
wherein the Tesla pump (48) is arranged upstream of the sensor (50) as seen in the direction of delivery.

5. The system for measuring temporally resolved through-flow processes of fluids according to one of claims 3 or 4,
wherein an inlet (60) to a flow space (58) of the Tesla pump (48), in which a rotor (54) of said Tesla pump (48) is arranged, is arranged geodetically below the branch (44) of the bypass line (16).

6. The system for measuring temporally resolved through-flow processes of fluids according to claim 5,
wherein the bypass line section (16.1) is defined between the branch (44) and the inlet (60) to the flow space (58) of the Tesla pump (48) such that it continuously descends towards said inlet (60) of said Tesla pump (48).

7. The system for measuring temporally resolved through-flow processes of fluids according to claim 6,
wherein the inclination of the bypass line section (16.1) between the branch (44) and the inlet (60) of the Tesla pump (48) ranges between 9° and 12°.

8. The system for measuring temporally resolved through-flow processes of fluids according to one of claims 3 to 7,
wherein an outlet (62) of the Tesla pump (48) is arranged geodetically above the flow space (58) of said Tesla pump (48).

9. The system for measuring temporally resolved through-flow processes of fluids according to claim 8,
wherein an outlet duct (64) of the Tesla pump (48) is configured such that it ascends in the direction of delivery.

10. The system for measuring temporally resolved through-flow processes of fluids according to one of claims 5 to 9,
wherein the system comprises a solid body (68) which is connected with a body (66) in which the circuitous line (26) is defined, and in which a flow space (58) of the pump (48), the inlet (60) of said pump (48), the outlet duct (64) of said pump (48) as well as a bypass line section (16.2) between said outlet duct (64) of said pump (48) and an inlet (70) of the sensor (50) as well as a bypass line section (16.5) between the outlet (72) of said sensor (50) and the opening (46) into said circuitous line (26) are at least partially defined.

11. The system for measuring temporally resolved through-flow processes of fluids according to one of the preceding claims,
wherein the through-flow cross-section of the bypass line (16) is smaller than the through-flow cross-section of the main line (16) and the circuitous line (26).

## Revendications

1. Système de mesure de processus d'écoulement de fluides résolus en temps comprenant
une entrée (12),
une sortie (14)
et un débitmètre (10) disposé entre l'entrée (12) et la sortie (14), comprenant
- une ligne principale (20) par laquelle la sortie (14) est connectée de manière fluidique à l'entrée (12),
- un élément déplaceur entrainable (22) disposé dans la ligne principale (20),
- une ligne de dérivation (26) qui branche de la ligne principale (20) entre l'entrée (12) et l'élément déplaceur (22) et débouche dans la ligne principale (20) entre l'élément déplaceur (22) et la sortie (14),
- un capteur de différence de pression (28) disposé dans la ligne de dérivation (26),
- et une unité d'évaluation et de commande (38), au moyen de laquelle l'élément déplaceur entrainable (22) peut être réglé en fonction de la différence de pression existant au capteur de différence de pression (28),
**caractérisé en ce qu'**une section de ligne (18) du dispositif de mesure de débit (10) peut être contournée par une ligne de contournement (16) branchant de la ligne principale (20) ou de la ligne de dérivation (26) et débouchant du même côté dudit élément déplaceur (22) et du capteur de différence de pression (28) dans la ligne principale (20) ou la ligne de dérivation (26), tout en contournant une section de ligne (18) de la ligne principale (20) ou de la ligne de dérivation (26), dans lequel dans la ligne de dérivation (16) une pompe (48) refoulant sans pulsation et un capteur (50) pour mesurer la densité ou la viscosité du fluide pompé sont disposés en série.

2. Système de mesure de processus d'écoulement résolus en temps de fluides selon la revendication 1, **caractérisé en ce que** la ligne de contournement (16) branche à partir de et débouche dans la ligne de dérivation (26) entre l'entrée (12) et le capteur de différence de pression (28).

3. Système de mesure de processus d'écoulement de fluides résolus en temps selon l'une quelconque des revendication précédentes, **caractérisé en ce que** la pompe refoulant sans pulsation (48) est une pompe Tesla.

4. Système de mesure de processus d'écoulement résolus en temps de fluides selon la revendication 3, **caractérisé en ce que** la pompe Tesla (48) est disposée devant le capteur (50) dans le sens de refoulement.

5. Système de mesure de processus d'écoulement résolus en temps de fluides selon l'une des revendications 3 ou 4, **caractérisé en ce qu'**une entrée (60) vers un espace d'écoulement (58) de la pompe Tesla (48), dans laquelle est disposé un rotor (54) de la pompe Tesla (48), est disposé géodésiquement sous la branche (44) de la ligne de contournement (16).

6. Système de mesure de processus d'écoulement résolus en temps de fluides selon la revendication 5, **caractérisé en ce que** la section de ligne de contournement (16.1) entre la branche (44) et l'entrée (60) vers l'espace d'écoulement (58) de la pompe Tesla (48) est formée de sorte à descendre en continu dans la direction de l'entrée (60) de la pompe Tesla (48).

7. Système de mesure de processus d'écoulement de fluides résolus en temps selon la revendication 6, **caractérisé en ce que** l'inclinaison de la section de ligne de contournement (16.1) entre la branche (44) et l'entrée (60) de la pompe Tesla (48) est comprise entre 9° et 12°.

8. Système de mesure de processus d'écoulement de fluides résolus en temps selon l'une des revendications 3 à 7, **caractérisé en ce qu'**une sortie (62) de la pompe Tesla (48) est disposée géodésiquement au-dessus de l'espace d'écoulement (58) de la pompe Tesla (48).

9. Système de mesure de processus d'écoulement résolus en temps de fluides selon la revendication 8, **caractérisé en ce qu'**un canal de sortie (64) de la pompe Tesla (48) est conçu pour monter dans la direction de refoulement.

10. Système de mesure de processus d'écoulement résolus en temps de fluides selon l'une des revendications 5 à 9, **caractérisé en ce que** le système comprend un corps solide (68) connecté à un corps (66) dans lequel la ligne de dérivation (26) est formée et dans lequel un espace d'écoulement (58) de la pompe (48), l'entrée (60) de la pompe (48), le canal de sortie (64) de la pompe (48) et une section de ligne de contournement (16.2) entre le canal de sortie (64) de la pompe (48) et une entrée (70) du capteur (50) et une section de ligne de contournement (16.5) entre la sortie (72) du capteur (50) et l'embouchure (46) dans la ligne de dérivation (26) sont au moins partiellement formées.

11. Système de mesure de processus d'écoulement résolus en temps de fluides selon l'une quelconque des revendications précédentes, **caractérisé en ce que** la section transversale d'écoulement de la ligne de contournement (16) est plus petite que la section transversale d'écoulement de la ligne principale (20) et de la ligne de dérivation (26).
